# EUROPEAN PATENT APPLICATION

(11) **EP 4 843 882 A1**
(43) Date of publication of application: **25.11.2026**
(21) Application number: 26177415.2
(22) Date of filing: 08.05.2026
(51) Int. Cl.: B63B 39/04, B63B 39/08, B63B 79/15, B63B 79/40, B63B 3/38, B63B 41/00, B63H 5/125, B63H 9/04

(54) **WIND-PROPELLED MARINE VESSEL**

(30) Priority: 20.05.2025 SE 2550495
(71) Applicant: Volvo Penta Corporation, 405 08 Göteborg (SE)
(72) Inventor: JOACHIMSSON, Jacob, TORSLANDA (SE)
(74) Representative: Ström & Gulliksson AB

(57) **Abstract**

The present disclosure relates to a wind-propelled marine vessel comprising a gyroscopic stabilization device, a heel angle sensor configured to detect a heel angle of the wind-propelled marine vessel, and a control unit, where the control unit is configured to monitor a current heel angle of the wind-propelled marine vessel, and an operation of the gyroscopic stabilization device, , where the control unit is configured to set a target heel angle of the gyroscopic stabilization device.

## Description

### TECHNICAL FIELD

The disclosure relates generally to stabilization of marine vessels. In particular aspects, the disclosure relates to a wind-propelled marine vessel. The disclosure can be applied to marine vessels, such as sailboats, watercrafts, motorboats, work boats, sport vessels, boats, ships, among other vessel types all having one or more devices harnessing wind power for propulsion on water. Although the disclosure may be described with respect to a particular marine vessel, the disclosure is not restricted to any particular marine vessel.

### BACKGROUND

Sailing has long been a cherished activity, blending the thrill of harnessing natural forces with the tranquility of being on the water. However, one persistent challenge in sailing is managing the heel angle of the wind-propelled marine vessel. The heel angle, or the degree to which a sailboat leans to one side under the force of the wind, significantly impacts both the comfort of those onboard and the vessel's overall performance.

Excessive heel angles can lead to discomfort, anxiety, and even seasickness among passengers, making the sailing experience less enjoyable, particularly for novice sailors or those sensitive to motion. Items can slide around, and movement around the boat becomes difficult and potentially hazardous. Therefore, maintaining a comfortable heel angle is crucial for enhancing the overall sailing experience.

From a performance perspective, an uncontrolled heel angle can lead to several drawbacks. An excessive heel angle can submerge the leeward rail, increasing drag and reducing speed. It can also cause the rudder to lose its effectiveness, making steering more difficult. In extreme conditions, it can even lead to a loss of control or capsizing. Conversely, insufficient heel can also be detrimental, as it may prevent the sails from achieving their optimal shape, reducing the driving force and overall efficiency.

Traditional methods for managing heel angle typically involve manual adjustments to the sails, such as reefing (reducing sail area), adjusting sail trim, or shifting crew weight to windward. While these techniques can be effective, they require constant attention and expertise, placing a significant burden on the crew. Moreover, they often involve trade-offs between comfort and performance. For example, reducing sail area to decrease heel may also reduce speed and power, especially in lighter winds.

Thus, there is a clear need for a more refined and adaptive solution to optimize the comfort and sailing experience for the crew onboard the wind-propelled marine vessel.

### SUMMARY

According to a first aspect of the disclosure, a wind-propelled marine vessel comprising a gyroscopic stabilization device, a heel angle sensor configured to detect a heel angle of the wind-propelled marine vessel, and a control unit, where the control unit is configured to monitor a current heel angle of the wind-propelled marine vessel, and an operation of the gyroscopic stabilization device, where the control unit is configured to set a target heel angle of the gyroscopic stabilization device.

The first aspect of the disclosure may seek to solve a problem by providing a more comfortable and stable sailing experience. It addresses the issue of excessive and uncomfortable heel angles that can occur during sailing, which can lead to seasickness, difficulty in movement, and a reduction in overall enjoyment for the crew. It also optimizes sailing performance by maintaining a desired heel angle, enhancing speed, control, and efficiency in varying sailing conditions.

A technical benefit may include enhanced responsiveness and adaptability to changing sailing conditions. The integration of a gyroscopic stabilization device, a heel angle sensor, and a control unit allows for real-time monitoring and adjustment of the vessel's heel angle. This results in a more stable and predictable sailing experience compared to traditional methods of heel control, which often rely on manual adjustments and may be slow to react to sudden changes in wind or wave conditions. The potential resulting improvement is a more comfortable, safer, and efficient sailing experience, particularly in challenging environments.

Optionally in some examples, including in at least one preferred example, the control unit is configured to determine a nominal heel angle of the wind-propelled marine vessel and to set the target heel angle as the nominal heel angle. A technical benefit may include providing a stable and consistent sailing experience by actively maintaining the vessel at a desired heel angle, thereby optimizing both comfort and performance.

Optionally in some examples, including in at least one preferred example, the nominal heel angle is the heel angle where the gyroscopic stabilization device applies an amount of corrective force in both roll directions of the wind-propelled marine vessel. A technical benefit may include providing a stable and balanced sailing experience by actively counteracting roll forces, leading to improved comfort and control, especially in choppy conditions.

Optionally in some examples, including in at least one preferred example, the nominal heel angle is the target heel angle setting of the gyroscopic stabilization device associated with reduced energy expenditure. A technical benefit may include optimizing energy efficiency by minimizing the power required to maintain the desired heel angle, extending the operational time of the system and reducing demands on the vessel's power supply.

Optionally in some examples, including in at least one preferred example, the nominal heel angle is at least partly manually configurable. A technical benefit may include allowing the operator to tailor the system's behavior to their preferences or specific sailing conditions, providing flexibility and control over the sailing experience.

Optionally in some examples, including in at least one preferred example, the control unit is configured to control a responsiveness of the gyroscopic stabilization device based on input from an operator so a preferred comfort level can be obtained and/or a power consumption of the stabilization device can be improved and/or optimized. A technical benefit may include allowing the operator to fine-tune the system's response to changes in heel angle, balancing comfort and energy consumption to suit their needs.

Optionally in some examples, including in at least one preferred example, the control unit is configured to lower the responsiveness of the gyroscopic stabilization device so that the power consumption of the stabilization device is minimized. A technical benefit may include extending the operational time of the system by reducing its energy demands, especially in conditions where rapid stabilization is not critical.

Optionally in some examples, including in at least one preferred example, the control unit is configured to dampen rapid changes in the target heel angle to alleviate and/or minimize abrupt movements, thereby increasing sailing comfort. A technical benefit may include providing a smoother and more comfortable sailing experience by preventing jerky or sudden movements caused by the stabilization system.

Optionally in some examples, including in at least one preferred example, the control unit is further configured to limit a rate of change of the target heel angle to enhance crew comfort. A technical benefit may include preventing sudden or jarring movements that can cause discomfort or seasickness, enhancing the overall sailing experience.

Optionally in some examples, including in at least one preferred example, further comprising an imaging device and/or a LiDAR sensor, where the imaging device and/or the LiDAR sensor is/are configured to detect wave patterns and/or height of the waves approaching the marine vessel. A technical benefit may include enabling predictive adjustments to the gyroscopic stabilization device based on incoming wave data, resulting in a smoother and more stable ride, and reduced energy consumption by anticipating and counteracting wave-induced motions.

Optionally in some examples, including in at least one preferred example, the control unit is configured to store a plurality of heel angle profiles, each profile optimized for different sailing conditions. A technical benefit may include allowing the operator to quickly select a pre-configured setting that is optimized for the current conditions, simplifying operation and improving performance.

Optionally in some examples, including in at least one preferred example, the heel angle sensor comprises a gyroscope to measure the rate of roll, enhancing the responsiveness of the control unit. A technical benefit may include providing more accurate and timely information to the control unit, enabling a faster and more effective response to changes in heel angle.

Optionally in some examples, including in at least one preferred example, further comprising a keel, a mast and a rudder. A technical benefit may include ensuring that the vessel has stability and control.

Optionally in some examples, including in at least one preferred example, further comprising one or more sails, the one or more sails are controllable by one or more sheets. A technical benefit may include ensuring that the vessel can harness the wind effectively.

Optionally in some examples, including in at least one preferred example, the control unit is operatively connected with the rudder and/or sheet(s). A technical benefit may include improving the overall control of the vessel and increasing comfort.

According to a second aspect of the disclosure, a method for controlling the heel angle of a wind-propelled marine vessel, the wind-propelled marine vessel comprising a gyroscopic stabilization device, a heel angle sensor, and a control unit, the method comprising:
detecting, by the heel angle sensor, a current heel angle of the wind-propelled marine vessel;
monitoring, by the control unit, the current heel angle and an operation of the gyroscopic stabilization device;
setting, by the control unit, a target heel angle for the gyroscopic stabilization device; and
adjusting the gyroscopic stabilization device to maintain the target heel angle, thereby stabilizing the wind-propelled marine vessel.

The second aspect of the disclosure may seek to solve a problem by providing a dynamic and automated approach to managing heel angle on wind-propelled marine vessels. This method addresses the challenges associated with manual heel angle control, which requires constant attention, expertise, and often results in trade-offs between comfort and performance. By automating the process of monitoring, determining, setting, and adjusting the heel angle, the method aims to alleviate the burden on the crew and optimize both the comfort and efficiency of sailing.

A technical benefit may include a more precise and responsive control over the heel angle. The method leverages a gyroscopic stabilization device, a heel angle sensor, and a control unit to continuously monitor and adjust the vessel's heel angle in real-time. This allows for a more nuanced and adaptive response to changing wind and wave conditions compared to traditional methods, resulting in a more stable and comfortable ride. The potential resulting improvement is a reduction in seasickness, improved sailing performance, and a more enjoyable sailing experience for all onboard.

Optionally in some examples, including in at least one preferred example, further comprising determining, by the control unit, a nominal heel angle of the wind-propelled marine vessel and setting the target heel angle based on the nominal heel angle. A technical benefit may include enabling the system to maintain a consistent and desirable heel angle, optimizing sailing comfort and performance while adapting to changing conditions.

Optionally in some examples, including in at least one preferred example, wherein the nominal heel angle is the heel angle where the gyroscopic stabilization device applies an amount of corrective force in both roll directions of the wind-propelled marine vessel. A technical benefit may include providing a balanced sailing experience.

Optionally in some examples, including in at least one preferred example, wherein the nominal heel angle is the target heel angle setting of the gyroscopic stabilization device associated with reduced and/or minimum energy expenditure. A technical benefit may include optimizing energy efficiency.

Optionally in some examples, including in at least one preferred example, wherein the nominal heel angle is at least partly manually configurable by an operator. A technical benefit may include allowing the operator to tailor the system's behavior.

Optionally in some examples, including in at least one preferred example, further comprising controlling a propeller drive unit of the marine vessel to complement the operation of the gyroscopic stabilization device. A technical benefit may include providing additional control over the marine vessel's stability.

Optionally in some examples, including in at least one preferred example, further comprising adjusting the target heel angle based on detected wave patterns to minimize wave-induced rolling. A technical benefit may include mitigating the effects of waves.

Optionally in some examples, including in at least one preferred example, further comprising dampening rapid changes in the target heel angle to alleviate and/or minimize abrupt movements and enhance sailing comfort. A technical benefit may include providing a smoother sailing experience.

Optionally in some examples, including in at least one preferred example, further comprising limiting the rate of change of the target heel angle to enhance crew comfort. A technical benefit may include preventing uncomfortable movements.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary wind-propelled marine vessel according to an example.
**FIG. 2** is an exemplary wind-propelled marine vessel seen in a side view.

### DETAILED DESCRIPTION

The detailed description set forth below provides information and examples of the disclosed technology with sufficient detail to enable those skilled in the art to practice the disclosure.

The disclosed technology addresses the persistent challenge of managing heel angle in wind-propelled marine vessels, particularly sailboats, to enhance both crew comfort and sailing performance. Excessive heel, the leaning of the vessel under wind force, can lead to discomfort, seasickness, and difficulty in movement for those onboard, while also reducing sailing efficiency and increasing the risk of capsizing. Existing solutions often rely on manual adjustments or lack the adaptability needed to balance comfort and performance across varying sailing conditions.

The disclosure introduces an automated system that actively monitors and controls the heel angle of the wind-propelled marine vessel. It comprises a gyroscopic stabilization device, a heel angle sensor, and a control unit working in concert. The heel angle sensor continuously detects the vessel's current heel angle, relaying this information to the control unit. The control unit then sets a target heel angle for the gyroscopic stabilization device.

The gyroscopic stabilization device, under the direction of the control unit, actively counteracts the forces causing the vessel to heel, striving to maintain the target heel angle. The gyroscopic stabilization device provides a resistance force against the heel angle. This entire process is dynamic and automated, allowing for continuous adjustments in response to changing wind and wave conditions.

The functions of the system are multifaceted. It actively stabilizes the vessel, reducing excessive heel and maintaining a more comfortable and safer environment for the crew. It optimizes sailing performance by maintaining a desired heel angle, enhancing speed, control, and efficiency. It also reduces the workload on the crew by automating the process of heel angle control, minimizing the need for manual adjustments.

The advantages of this technology are numerous. It provides a more stable and comfortable sailing experience, reducing the likelihood of seasickness and improving overall enjoyment. It enhances sailing performance, allowing the vessel to achieve its optimal speed and efficiency. It automates the process of heel angle control, reducing the workload on the crew and allowing them to focus on other aspects of sailing. It is also adaptable to varying sailing conditions, automatically adjusting to changes in wind and wave conditions to maintain the desired heel angle.

Traditional methods of heel angle control rely on manual adjustments, which require constant attention and expertise. The present disclosure offers a more refined and effective solution, providing a stable, comfortable, and efficient sailing experience in a wide range of conditions. By continuously monitoring and adjusting the marine vessel's heel angle, it provides a more responsive and adaptable solution compared to traditional methods, resulting in a more comfortable, safer, and efficient sailing experience, particularly in challenging environments.

Wind-propelled marine vessels are watercraft designed to be propelled primarily by the force of the wind acting upon a surface, most commonly a sail, but also including kites, wing sails, Magnus rotors, or other similar devices. These marine vessels harness the kinetic energy of the wind and convert it into forward motion through aerodynamic principles.

The fundamental principle behind wind propulsion involves the interaction between the wind and the marine vessel's sails (or other wind-harnessing devices). When the wind strikes the sail, it creates a pressure difference between the two sides of the sail. The side of the sail facing the wind (the windward side) experiences higher pressure, while the opposite side (the leeward side) experiences lower pressure. This pressure difference generates a force that pushes the sail, and consequently the vessel, forward.

The direction of this force is not directly forward but rather at an angle to the vessel's direction of travel. This is because the sail is typically angled relative to the wind. The force can be resolved into two components: one component acting in the direction of the vessel's motion (propelling the marine vessel forward) and another component acting perpendicular to the vessel's motion (pushing the marine vessel sideways).

The sideways force, also known as the lateral force, is what causes the marine vessel to heel, or lean to one side. The magnitude of the heeling force depends on several factors, including the wind speed, the sail area, and the angle of the sail to the wind. The larger the sail area and the stronger the wind, the greater the heeling force.

To counteract the heeling force, wind-propelled marine vessels typically employ a keel or other underwater appendage. The keel is a vertical fin-like structure that extends below the hull of the vessel. When the vessel heels, the keel generates an opposing force that resists the sideways motion. This opposing force is created by the water flowing around the keel as the vessel moves through the water. The deeper the keel and the greater the angle of heel, the greater the opposing force.

The interplay between the heeling force generated by the wind and the opposing force generated by the keel is crucial for maintaining the stability and control of the wind-propelled marine vessel. The vessel will heel until these two forces are in equilibrium. However, excessive heel can lead to reduced sailing efficiency, discomfort for the crew, and an increased risk of capsizing. Therefore, managing heel angle is a critical aspect of sailing.

In the following the present disclosure is described in relation to a sailboat, however, the present disclosure may as well be used to other marine vessels having some device for harvesting the kinetic energy of the wind and convert it into forward motion.

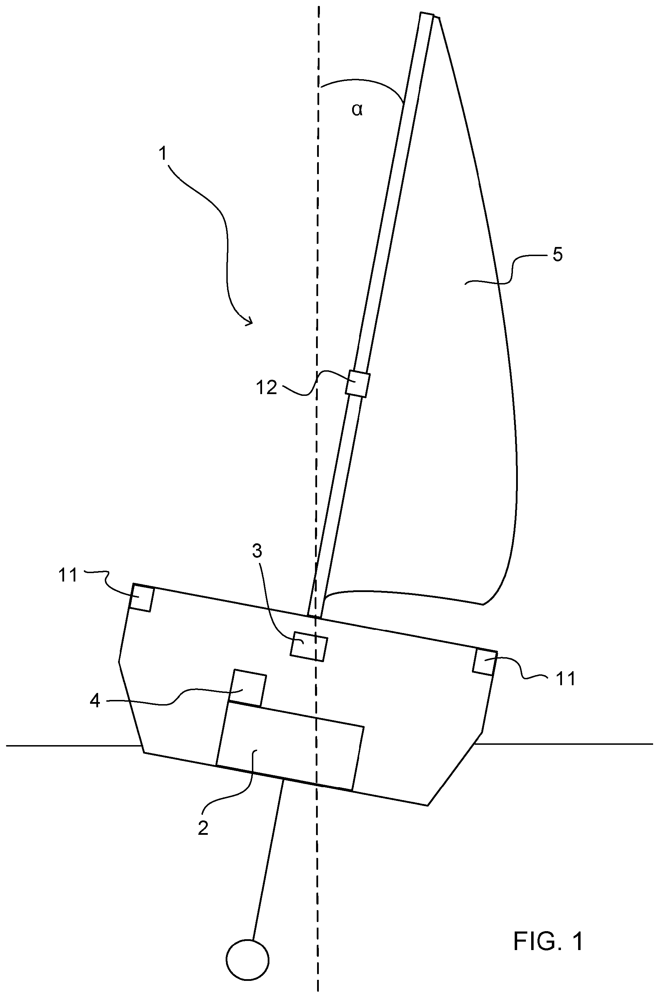

**FIG. 1** is an exemplary wind-propelled marine vessel 1 according to an example. The wind-propelled marine vessel 1 comprising a gyroscopic stabilization device 2, a heel angle sensor 3 configured to detect a heel angle α of the wind-propelled marine vessel 1, and a control unit 4, where the control unit 4 is configured to monitor a current heel angle of the wind-propelled marine vessel 1, and an operation of the gyroscopic stabilization device 2. The control unit 4 may be configured to determine a nominal heel angle of the wind-propelled marine vessel as the average heel angle that the wind-propelled marine vessel 1 strives at, where the control unit 4 is configured to set a target heel angle of the gyroscopic stabilization device 2. The control unit 4 may monitor this current heel angle, comparing it to a pre-determined nominal heel angle, which may represent the average heel angle the marine vessel aims to maintain. The nominal heel angle can be pre-set, or determined as the marine vessel is being operated as the average heel angle.

Within the described wind-propelled marine vessel 1, the control unit 4 controls the dynamic management of the heel angle α on the wind-propelled marine vessel 1, i.e. a sailboat 1, to ensure both stability and crew comfort. The process is initiated by the heel angle sensor 3, which continuously detects the marine vessel's 1 instantaneous heel angle α and transmits this data in real-time to the control unit 4. The control unit 4 meticulously monitors this incoming data stream, constantly assessing the marine vessel's current inclination and comparing it against a defined nominal heel angle.

The nominal heel angle represents the ideal or desired heel angle for the marine vessel 1. In some implementations, this nominal heel angle may be a pre-programmed value, meticulously chosen based on the marine vessel's design characteristics, hull shape, and intended operational profile. Alternatively, the control unit 4 may possess the capability to dynamically calculate the nominal heel angle during operation, effectively learning the marine vessel's preferred inclination as it navigates various wind and sea conditions. This dynamic calculation could involve averaging the marine vessel's 1 heel angle α over a specific time period, or employing more sophisticated algorithms to identify the heel angle that corresponds to optimal sailing performance or crew comfort.

Once the nominal heel angle has been established, the control unit 4 proceeds to set a target heel angle for the gyroscopic stabilization device 2, carefully aligning this target with the determined nominal heel angle. This target heel angle serves as the reference point for the gyroscopic stabilization device 2, guiding its actions as it strives to maintain the marine vessel's 1 heel within the desired range.

The control unit 4 then engages in a continuous communication with the gyroscopic stabilization device 2, issuing instructions that dictate the magnitude and direction of the counteracting force it must exert against the marine vessel's heel. This communication is based on a real-time assessment of the discrepancy between the current heel angle and the target heel angle. If the marine vessel's current heel exceeds the target, the control unit 4 commands the gyroscopic stabilization device 2 to apply a corrective force that reduces the inclination. Conversely, if the marine vessel's current heel is less than the target, the control unit 4 may instruct the gyroscopic stabilization device 2 to reduce its counteracting force, allowing the marine vessel 1 to heel slightly.

Hence, the control unit 4 may use a closed-loop control system, continuously monitoring the marine vessel's heel angle, comparing it to the desired nominal heel angle, and adaptive adjusting the gyroscopic stabilization device 2 to minimize any deviations. This dynamic and adaptive approach ensures that the marine vessel 1 maintains a stable and comfortable heel angle, even in the face of unpredictable wind gusts, turbulent seas, and shifts in marine vessel loading. By automating this process, the control unit 4 relieves the crew of the burden of manual heel angle adjustments, allowing them to focus on other critical aspects of sailing, such as navigation, sail trim, and overall vessel management.

The control unit 4 may include a microprocessor, microcontroller, programmable digital signal processor or another programmable device. The control unit 4 may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The heel angle of the sailboat 1 is the roll angle α as the sailboat is under sail 5. This heel angle α is of course dynamic, i.e., changes over time, due to the influence of wind and waves.

The gyroscopic stabilization device 2 is able to resist roll motion by a body in a known manner. The resistance force can be modulated by use of a controllable gimbal arrangement.

The solution should ideally be capable of automatically adjusting to varying sailing conditions, balancing the competing demands of comfort and performance, and minimizing the need for manual intervention by the crew. According to the present disclosure, the gyroscopic stabilization device 2 is used to reduce jerkiness during sailing in order to provide a smoother ride. The gyroscopic stabilization device 2 will strive to keep the sailboat 1 at a given nominal heel angle, and resist deviation from this nominal heel angle. The nominal heel angle is then continuously updated by the control unit to account for, e.g, changes in wind strength and change of course.

Furthermore, the nominal heel angle is the heel angle where the gyroscopic stabilization device 2 applies an amount of corrective force in both roll directions of the wind-propelled marine vessel 1 so that a stable and balanced sailing experience by actively counteracting roll forces, leading to improved comfort and control, especially in choppy conditions is provided. In an example, the nominal heel angle is the target heel angle setting of the gyroscopic stabilization device 2 associated with reduced energy expenditure. Hereby is obtained that the energy efficiency is obtained by reducing the power required to maintain the desired heel angle, extending the operational time of the system and reducing demands on the marine vessel's power supply. This is especially important on sailboats having limited power supply.

The disclosed technology further addresses the unique dynamic equilibrium of a wind-propelled marine vessel where the heeling moment is primarily a function of the aerodynamic force generated by the wind acting upon the sail area at a specific center of effort. Unlike motor-driven vessels where roll is typically an undesirable oscillation around a level state, a sailboat often requires a specific heel angle to maintain optimal sail shape and hydrodynamic flow over the keel. In some examples, the control unit comprises heel optimization circuitry configured to identify a nominal heel angle that balances the lift-to-drag ratio of the underwater foils with the aerodynamic efficiency of the sails. This nominal heel angle may be dynamically adjusted by the control unit as a function of the apparent wind angle and apparent wind speed data received from a wind sensor service. By utilizing the gyroscopic stabilization device to maintain this non-zero target heel angle, the disclosed technology allows the vessel to remain in its most efficient performance orientation even during fluctuating wind gusts or changing sea states, thereby reducing the need for constant manual sail trimming or reefing.

Moreover, the nominal heel angle may be at least partly manually configurable. A technical benefit may include allowing the operator to tailor the system's behavior to their preferences or specific sailing conditions, providing flexibility and control over the sailing experience. An input device may be arranged so that the nominal heel angle may be set via the input device. A technical benefit may include providing a convenient and intuitive way for the operator to adjust the desired heel angle, enhancing usability and control.

In addition, the control unit 4 may be configured to control a responsiveness of the gyroscopic stabilization device 2 based on input from an operator so a preferred comfort level can be obtained and/or a power consumption of the stabilization device 2 can be improved and/or optimized. A technical benefit may include allowing the operator to fine-tune the system's response to changes in heel angle, balancing comfort and energy consumption to suit their needs. In an example, the control unit 4 may be configured to lower the responsiveness of the gyroscopic stabilization device 2 so that the power consumption of the stabilization device 2 is minimized. A technical benefit may include extending the operational time of the system by reducing its energy demands, especially in conditions where rapid stabilization is not critical.

The control unit 4 may also be configured to adjust the target heel angle based on detected wave patterns. A technical benefit may include proactively mitigating the effects of waves on the vessel's stability, providing a smoother and more comfortable ride in rough seas. The control unit 4 may also be configured to dampen rapid changes in the target heel angle to alleviate and/or minimize abrupt movements, thereby increasing sailing comfort. A technical benefit may include providing a smoother and more comfortable sailing experience by preventing jerky or sudden movements caused by the stabilization system.

To further refine the control of the gyroscopic stabilization device 2 and achieve a more proactive response to wave-induced heeling motions, the system may incorporate a wave detection mechanism comprising an imaging device 11, such as a camera, and/or a LiDAR sensor 11. These sensors provide the control unit 4 with the ability to anticipate the marine vessel's reaction to oncoming waves, enabling predictive adjustments to the gyroscopic stabilization device 2.

In this configuration, the imaging device, ideally a camera system to facilitate depth perception, captures images of the sea surface ahead, at the sides or from behind of the wind-propelled marine vessel 1. These images are then processed using image processing algorithms to extract key information regarding the approaching wave patterns. The algorithms are designed to identify parameters such as the wavelength, amplitude, and direction of the waves, providing a comprehensive understanding of the wave field.

Alternatively, or in conjunction with the imaging device, a LiDAR (Light Detection and Ranging) sensor 11 can be employed. The LiDAR sensor 11 emits laser pulses and precisely measures the time taken for these pulses to return after reflecting off the sea surface. This time-of-flight information is then used to construct a three-dimensional representation of the wave surface, yielding accurate measurements of wave height and shape.

The control unit 4 may fuse the data acquired from the imaging device 11 and the LiDAR sensor 11 to generate a more complete and reliable model of the approaching wave field. It then may employ wave prediction algorithms to extrapolate the detected wave patterns and estimate the wave height and arrival time at the marine vessel. These algorithms account for factors such as wave speed, direction, and dispersion, enabling the control unit 4 to anticipate the wave's impact on the marine vessel.

Based on the predicted wave characteristics, the control unit 4 may estimate the heeling moment that the waves will exert on the marine vessel. With this predicted heeling moment, the control unit may proactively adjust the gyroscopic stabilization device 2 before the wave reaches the marine vessel. This feedforward control action allows the stabilization device 2 to counteract the wave-induced heel in advance, minimizing the vessel's response to the wave and maintaining a more stable platform.

Furthermore, the control unit 4 may also implement gain scheduling, dynamically adjusting the gain, or sensitivity, of the gyroscopic stabilization device 2 based on the predicted wave height and frequency. This allows for a more nuanced response, with higher gain settings employed in more challenging sea states to provide more aggressive stabilization. Moreover, the control unit may utilize the predicted wave information to actively damp the marine vessel's motion, adjusting the phase of the stabilization force to counteract the marine vessel's natural roll period and further reduce unwanted movement.

This predictive control system may be integrated with a traditional feedback control system that relies on the heel angle sensor 3 to measure the marine vessel's actual heel angle. The feedforward control action minimizes the magnitude of heel angle deviations, while the feedback control system corrects any residual errors, resulting in a highly accurate and responsive system.

The incorporation of this predictive control system offers several advantages, including improved marine vessel stability, reduced energy consumption by the gyroscopic stabilization device 2, and enhanced crew comfort due to the smoother ride. By proactively anticipating and counteracting wave-induced heeling motions, the system provides a significant improvement over reactive stabilization systems.

To further enhance the predictive capabilities of the system, a LiDAR sensor 12 can be strategically implemented to detect both the direction and strength of the wind, enabling the control unit 4 to proactively manage the marine vessel's heel angle through control of the gyroscopic stabilization device 2. This approach allows for the anticipation and mitigation of wind-induced heeling forces, resulting in a more stable and comfortable sailing experience.

In this example, the LiDAR sensor 12 is positioned on the wind-propelled marine vessel 1 to effectively scan the surrounding airspace. The LiDAR sensor emits laser pulses and analyzes the resulting backscatter from aerosols and other particles present in the air to precisely determine the wind velocity vector. This process provides the control unit 4 with real-time data pertaining to both the speed and direction of the wind.

The control unit 4 may then employ algorithms to process the LiDAR data and predict the heeling moment that the wind will exert on the marine vessel 1. This predictive calculation takes into account various factors, including the marine vessel's sail area, the angle of attack of the wind on the sails, and/or the specific hull shape of the marine vessel. The control unit 4 may also incorporate a learning mechanism to analyze the vessel's response characteristics over time, further refining the accuracy of its predictions.

Based on the predicted heeling moment, the control unit 4 may proactively adjust the gyroscopic stabilization device 2 before the wind has a significant impact on the marine vessel's heel. This feedforward control strategy may enable the stabilization device 2 to counteract the wind-induced heeling force in advance, minimizing the vessel's response to the wind and maintaining a more stable platform.

The control unit may 4 utilize various strategies to effectively control the gyroscopic stabilization device 2 based on the LiDAR data. These strategies include a feedforward control where the control unit 4 uses the predicted heeling moment to adjust the stabilization force in a feedforward manner, activating the stabilization device 2 before the vessel 1 begins to heel due to the anticipated wind force, a gain scheduling where the control unit 4 adjusts the gain, or sensitivity, of the stabilization device based on the predicted wind strength. This allows for a dynamic response, with higher gain settings employed in high wind conditions to provide more aggressive stabilization. Moreover, a dynamic heel angle a adjustment may be applied, where the control unit dynamically adjusts the target heel angle based on the predicted wind direction. For example, if the wind is shifting to starboard, the control unit 4 may slightly increase the target heel angle to starboard to compensate for the anticipated change in heeling force.

In addition to these strategies, the predictive control system may be combined with a traditional feedback control system that utilizes the heel angle sensor 3 to measure the marine vessel's actual heel angle. This combination allows the feedforward control action to minimize the magnitude of heel angle deviations, while the feedback control system corrects any residual errors, resulting in a highly accurate and responsive system.

By integrating the LiDAR sensor to detect wind direction and strength, the control unit 4 may proactively manage the marine vessel's heel angle, resulting in improved stability, reduced energy consumption, and enhanced comfort for the crew. This predictive approach enables the system to respond to changing wind conditions before they directly impact the vessel, offering a significant improvement over traditional reactive stabilization systems. Furthermore, the LiDAR sensor's ability to detect gusts of wind allows the control unit 4 to anticipate and mitigate the impact of these sudden changes in wind force, further enhancing the vessel's stability.

To enhance the predictive capabilities of the disclosed technology, the wind-propelled marine vessel 1 may include a wind sensing service comprising the LiDAR sensor configured to scan the atmospheric conditions windward of the marine vessel 1. The wind sensing service provides data pertaining to the velocity vector and turbulence intensity of incoming wind gusts before they contact the sails. The control unit 4 utilizes this data to perform a feedforward adjustment of the gyroscopic stabilization device 2. Specifically, the control unit 4 may initiate precession of the gyroscopic stabilization device 2 gimbal to develop a counter-torque that coincides precisely with the arrival of a wind-induced heeling moment. This stabilization reduces the peak heel error and prevents the jerky motion associated with reactive systems that only respond after a heel deviation has been detected by an inertial measurement unit.

The imaging device 11 and/or the LiDAR sensors 11, 12 may be arranged on the marine vessel so that the surroundings of the marine vessel is monitored. The imaging devices 11 and/or LiDAR sensors 11, 12 may be embedded in the hull, be mounted on the deck of the hull, or at other positions as well as arranged on the mast. They may be arranged at the stern end of the hull, at the bow end of the hull as well as on starboard and portside of the hull so that the marine vessel is monitored 360 degrees around the marine vessel.

In an example, the control unit 4 may be configured to gradually adjust the target heel angle over time, providing a smooth transition and enhanced sailing experience. A technical benefit may include creating a more natural and comfortable sailing experience by avoiding sudden or jarring changes in heel angle.

Additionally, the control unit 4 may further be configured to take into account the heading of the marine vessel 1. A technical benefit may include optimizing the stabilization system's performance based on the marine vessel's direction of travel, improving stability and control in varying conditions and courses as well as different angles of attack.

The marine vessel 1 may comprise a speed log or log. The control unit 4 may be operatively connected with the speed log and the control unit 4 may be configured to take into account the speed of the marine vessel. A technical benefit may include adjusting the stabilization system's response based on the vessel's speed, improving stability and control at different speeds.

Furthermore, the control unit 4 may be configured to limit a rate of change of the target heel angle to enhance crew comfort. A technical benefit may include preventing sudden or jarring movements that can cause discomfort or seasickness, enhancing the overall sailing experience. In an example, the control unit 4 may be configured to allow a manual override to adjust the target heel angle, providing direct control to the operator. A technical benefit may include giving the operator the ability to fine-tune the system's behavior or respond to unexpected conditions, enhancing control and safety.

Moreover, the control unit may be configured to store a plurality of heel angle profiles, each profile optimized for different sailing conditions. A technical benefit may include allowing the operator to quickly select a pre-configured setting that is optimized for the current conditions, simplifying operation and improving performance. In an example, the control unit 4 may be configured to automatically select a heel angle profile based on detected sea state and wind conditions. A technical benefit may include automating the process of selecting the optimal stabilization settings, improving performance and reducing the workload on the operator.

Furthermore, the control unit may include a profile manager configured to store and retrieve heel angle profiles optimized for specific points of sail, such as beating, reaching, or running. In some examples, the profile manager automatically selects a profile based on a comparison between the current vessel heading and the wind direction data. Each profile may define not only the target heel angle but also the responsiveness gain of the gyroscopic stabilization device gimbal circuitry. For instance, when sailing close-hauled in choppy conditions, the control unit may implement a high-responsiveness profile to dampen rapid wave-induced rolling while maintaining a steady heel. Conversely, when sailing downwind, the control unit may implement a power-save profile that lowers the responsiveness to conserve energy from the power supply, as the heeling forces are generally reduced in such orientations.

In addition, the control unit 4 may be configured to adjust the sensitivity of the gyroscopic stabilization device 2 based on crew preferences. A technical benefit may include accommodating the individual comfort levels of different crew members, enhancing the overall sailing experience.

In an example, the heel angle sensor 3 may comprise a gyroscope to measure the rate of roll, enhancing the responsiveness of the control unit 4. A technical benefit may include providing more accurate and timely information to the control unit, enabling a faster and more effective response to changes in heel angle.

The control unit 4 may also be configured to communicate with an autopilot system to coordinate steering and heel angle control. A technical benefit may include integrating the stabilization system with other vessel control systems, improving overall performance and reducing the workload on the operator.

The sailboat 1 may also comprise a display, the control unit 4 is operatively connected with the display. The control unit 4 may be configured to provide feedback to the operator via a display interface, showing real-time heel angle data on the display. A technical benefit may include giving the operator valuable information about the system's performance and the vessel's stability, enhancing awareness and control.

The sailboat 1 may also comprise a wind sensor. The control unit 4 is operatively connected with the wind sensor whereby the control unit 4 uses wind speed and direction to adjust the target heel angle. A technical benefit may include proactively adjusting the stabilization system based on wind conditions, improving performance and reducing the need for manual adjustments. In an example, the control unit may be configured to reduce the stabilization effect in low wind conditions to improve sailing efficiency. A technical benefit may include minimizing the energy consumption of the stabilization system when its assistance is not needed, extending operational time and reducing demands on the vessel's power supply. In another example, the control unit 4 may be configured to increase the stabilization effect in high wind conditions to maintain a stable heel angle. A technical benefit may include providing maximum stability and control in challenging conditions, enhancing safety and reducing the risk of capsizing.

Moreover, the control unit 4 may be configured to learn operator preferences over time and adapt the control strategy of the accordingly. A technical benefit may include personalizing the system's behavior to the operator's individual sailing style and preferences, improving comfort and performance. In another example, the control unit 4 may be configured to provide an alert if the heel angle exceeds a predefined safety threshold. A technical benefit may include enhancing safety by warning the operator of potentially dangerous conditions, allowing them to take corrective action.

Furthermore, the control unit 4 may be configured to adjust the target heel angle based on the marine vessel's polar diagram to optimize speed and stability. A technical benefit may include maximizing the vessel's performance by maintaining an optimal heel angle for the current sailing conditions.

According to the disclosure, the control unit 4 may be configured to minimize energy consumption of the gyroscopic stabilization device 2 while maintaining desired heel control. A technical benefit may include extending the operational time of the system and reducing demands on the vessel's power supply.

The control unit 4 may be configured to take into account the sea state when controlling the heel angle. A technical benefit may include adapting the stabilization system's response to the specific characteristics of the sea, improving performance and comfort in varying conditions. Additionally, the control unit may be configured to adjust the target heel angle to minimize wave-induced rolling. A technical benefit may include providing a smoother and more comfortable ride by actively counteracting the effects of waves on the vessel's stability.

Also, the control unit 4 may be configured to detect and compensate for changes in the marine vessel's center of gravity due to crew movement or load shifting. A technical benefit may include maintaining stability and control even when the vessel's weight distribution changes, enhancing safety and performance. In some examples, the control unit 4 may be configured to provide a detailed log of heel angle data and control actions for analysis and performance optimization. A technical benefit may include providing valuable data for analyzing the system's performance and identifying areas for improvement, leading to continuous enhancements in stability and control.

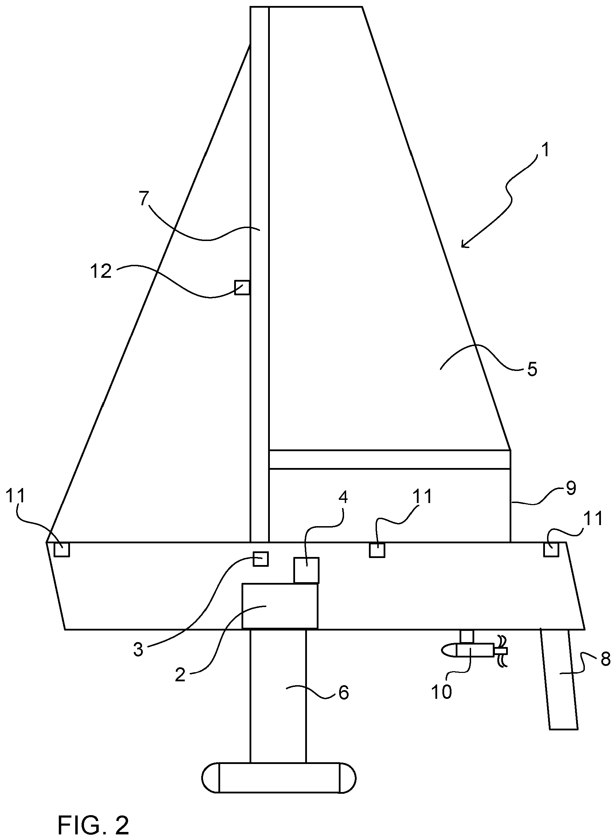

In **FIG. 2****,** a sailboat 1 is shown in a side view. The sailboat 1 comprises a keel 6, a mast 7 and a rudder 8. One or more sails 5 are arranged on the mast 7 and via the rigging. The one or more sails 5 are controllable by one or more sheets 9. A technical benefit may include ensuring that the vessel can harness the wind effectively. In an example, the control unit 4 is operatively connected with the rudder 8 and/or sheet(s) 9. A technical benefit may include improving the overall control of the vessel and increasing comfort.

The keel 6 may be drop keel and/or a swingable keel. A technical benefit may include adjusting the depth of the keel for specific sailing conditions. The sailboat 1 may further comprise a mechanism to lower or raise the drop keel, and/or swing the swingable keel. A technical benefit may include adjusting the keel for sailing conditions. The control unit may be operatively connected with the mechanism. A technical benefit may include automating the process of adjusting the keel, to assist in controlling the heel angle of the sailboat.

In addition, the control unit 4 may be configured to control a propeller drive unit 10 of the sailboat 1 to complement the operation by the gyroscopic stabilization device 2. A technical benefit may include providing additional control over the vessel's stability and maneuverability.

The control unit 4 may be configured control the propeller drive unit 10 in a manner that complements the operation of the gyroscopic stabilization device 2, thereby achieving enhanced heel angle reduction. This synergistic action is predicated on the principle of utilizing the propeller's thrust to generate a force that may counteract the heeling force acting upon the marine vessel, either through direct or indirect means.

An example may comprise direct thrust vectoring, wherein the control unit 4 dynamically adjusts the direction of thrust produced by the propeller drive unit 10. This can be accomplished through the implementation of a steerable propeller pod, a system of positioned rudders or deflectors within the propeller stream, or even by articulating the entirety of the propeller drive unit. In instances where the marine vessel experiences heeling to starboard, the control unit 4 may command the propeller drive unit 10 to redirect thrust slightly to port. This action generates a horizontal force component that directly opposes the heeling force, thereby assisting in the righting of the marine vessel. The magnitude of this thrust vectoring is proportionally related to the size of the heel, as quantified by the heel angle sensor.

In another example, an indirect method of heel reduction can be achieved through yaw control. Rather than directly counteracting the heel, the propeller drive unit 10 may be employed to induce a yaw moment on the marine vessel. This yaw moment, when coupled with the marine vessel's forward motion, generates a righting moment that contributes to reducing the heel angle. In situations where the marine vessel is heeling to starboard, the control unit 4 may instruct the propeller drive unit 10 to create a slight yaw to port. As the marine vessel progresses forward, this yaw generates a pressure differential along the hull, resulting in a force that pushes the marine vessel back towards an upright position. The degree of yaw induced may be carefully regulated to strike a balance between heel reduction and maintaining the desired course.

Furthermore, the control unit 4 may also modulate the propeller thrust based on the heel angle. For example, if the marine vessel is heeling to starboard, the control unit 4 may slightly increase the propeller thrust. This increased thrust can increase the vessel speed. This increased vessel speed will result in larger force by the keel which can help right the marine vessel.

Moreover, the control unit 4 may also blend the operation of the propeller drive unit 10 and the gyroscopic stabilization device 2, optimizing the overall heel control strategy. The control unit 4 may be configured to prioritize the gyroscopic stabilization device 2 for minor heel corrections, given its inherent energy efficiency. However, when confronted with more substantial heel corrections, or in scenarios where the gyroscopic stabilization device 2 is approaching its operational limits, the control unit 4 may engage the propeller drive unit 10 to provide and assist in supplementary righting force.

In some examples, the control unit 4 may be operatively coupled to the propeller drive unit 10 comprising a steerable pod or a thrust vectoring nozzle. To complement the torque output of the gyroscopic stabilization device 2, the control unit 4 may include drive coordination circuitry that calculates a required auxiliary righting moment. The drive coordination circuitry then directs the propeller drive unit to generate a lateral thrust component. This lateral thrust component creates a moment arm relative to the center of gravity of the wind-propelled marine vessel 1, providing an active righting force that can be modulated in real-time. This synergistic operation is particularly beneficial in heavy weather conditions where the heeling moment exceeds the maximum control torque capacity of the gyroscopic stabilization device. By blending the gyroscopic resistance with directed propeller thrust, the system ensures the wind-propelled marine vessel 1 remains within safe operational heel limits without requiring a reduction in sail area, thus preserving vessel speed.

The control unit 4 may also be configured to distribute the load between the two systems, in heavy seas, the propeller drive unit 10 may be employed to sustain a baseline level of stability, while the gyroscopic stabilization device 2 may manage the more rapid and transient heel variations.

The effectiveness of this integrated heel control system may rely on the control unit's 4 ability to accurately interpret data from various sensors, including the heel angle sensor, wind speed sensor, boat speed sensor, rudder angle sensor, camera, LiDAR, and/or GPS. Sensor fusion methods may be implemented to synthesize data from multiple sources, enhancing the accuracy and reliability of the heel angle estimation. Moreover, the control unit 4 may employ adaptive control algorithms that learn the marine vessel's response characteristics and dynamically adjust control parameters to optimize performance across a spectrum of operating conditions. Safety limits are also incorporated to prevent overstressing the propeller drive unit 10 or the marine vessel's structural integrity. A user interface may be be provided to enable the operator to monitor system performance and adjust parameters, such as the level of propeller assistance.

By coordinating the operation of the propeller drive unit 10 and the gyroscopic stabilization device 2, the control unit 4 may significantly enhance the marine vessel's stability, improve sailing comfort, and optimize performance across a diverse range of sailing conditions.

The wind-propelled marine vessel 1 comprises a device for harnessing wind power to propel the marine vessel. A technical benefit may include ensuring that the stabilization system is compatible with any type of wind-powered vessel. The device is a sail 5, a kite, a wing, a magnus rotor, or the like, and any combination thereof. A technical benefit may include ensuring that the stabilization system is compatible with various methods of wind propulsion.

The present disclosure also relates to a method for effectively controlling the heel angle, denoted as α, of a wind-propelled marine vessel 1. This method leverages a combination of key components integrated within the marine vessel 1, namely a gyroscopic stabilization device 2, a heel angle sensor 3, and a control unit 4. The method initiates with the heel angle sensor 3 continuously detecting the prevailing heel angle of the wind-propelled marine vessel 1. This real-time heel angle data is then transmitted to the control unit 4, which serves as the central processing and decision-making hub for the entire system. Upon receiving the heel angle data, the control unit 4 initiates a monitoring process, observing both the current heel angle and the operational status of the gyroscopic stabilization device 2. This dual monitoring enables the control unit 4 to gain a comprehensive understanding of the vessel's stability and the stabilization device's performance. The control unit 4 proceeds to set a target heel angle specifically for the gyroscopic stabilization device 2. This target heel angle ensuring that the stabilization device 2 actively works to maintain the vessel's heel as close as possible to the desired value. Finally, the control unit 4 controls the adjustment of the gyroscopic stabilization device 2, instructing it to exert a corrective force that counteracts the vessel's heel. This adjustment is dynamically tailored to maintain the target heel angle, effectively stabilizing the wind-propelled marine vessel 1 and enhancing both its performance and the comfort of those on board. The continuous and automated nature of this method provides a significant advantage over traditional manual heel control techniques, offering improved stability, reduced crew workload, and enhanced adaptability to varying sailing conditions. By actively managing the heel angle, this method contributes to a more efficient, comfortable, and safer sailing experience. Subsequently, the control unit 4 may undertake the task of determining a "nominal heel angle" for the wind-propelled marine vessel. This nominal heel angle may represent the average heel angle that the wind-propelled marine vessel strives at, essentially defining the desired or target heel angle for optimal performance and comfort.

In certain implementations of this method, the nominal heel angle is strategically defined as the heel angle at which the gyroscopic stabilization device 2 applies a substantially equal and opposite corrective force in both roll directions of the wind-propelled marine vessel 1. This approach inherently promotes a balanced sailing experience, reducing the marine vessel's tendency to lean excessively to either side and enhancing overall stability.

To further optimize energy efficiency, the nominal heel angle can be configured as the target heel angle setting of the gyroscopic stabilization device 2 that corresponds to reduced energy expenditure. This intelligent configuration ensures that the stabilization device operates at its most efficient point, reducing power consumption and extending the vessel's operational range.

Recognizing the importance of operator control, the method also allows for the nominal heel angle to be at least partly manually configurable by an operator. This functionality empowers the operator to tailor the system's behavior to their specific preferences, sailing style, or prevailing conditions, providing a greater degree of customization and control.

To enhance overall vessel stability, the method can be extended to include controlling a propeller drive unit 10 of the marine vessel 1 in coordination with the gyroscopic stabilization device 2. By seamlessly integrating the propeller drive unit into the heel control strategy, the system can achieve a more comprehensive and responsive stabilization effect.

In order to proactively mitigate the effects of waves, the method may incorporate the functionality of adjusting the target heel angle based on detected wave patterns. This wave-adaptive control strategy enables the system to anticipate and counteract wave-induced rolling, resulting in a smoother and more comfortable ride for the crew.

Precise control over the gyroscopic stabilization device 2 is achieved through the modulation of resistance force using a controllable gimbal arrangement. This gimbal arrangement allows for fine-tuning of the stabilization force, enabling the system to respond quickly and accurately to changes in heel angle.

To further enhance sailing comfort, the method includes dampening rapid changes in the target heel angle. This dampening effect alleviates and/or minimizes abrupt movements and prevents jerky or jarring motions, providing a smoother and more pleasant sailing experience for the crew.

A more natural sailing experience is achieved through the gradual adjustment of the target heel angle over time. This gradual transition ensures that changes in heel angle are smooth and imperceptible, avoiding any sudden or uncomfortable shifts in the vessel's orientation.

To optimize the stabilization system's performance across a wide range of sailing conditions, the method incorporates the functionality of taking into account both the heading and speed of the marine vessel 1 when determining the nominal heel angle. This comprehensive approach ensures that the stabilization system is finely tuned to the vessel's current operational state.

Crew comfort is further prioritized by limiting the rate of change of the target heel angle. This rate limiting prevents uncomfortable movements and ensures that changes in heel angle are gradual and gentle, minimizing the risk of seasickness or fatigue.

Recognizing the importance of operator intervention, the method provides for a manual override functionality, allowing the operator to directly adjust the target heel angle. This manual override empowers the operator to fine-tune the system's behavior or respond to unexpected conditions, providing an added layer of control and safety.

To simplify operation and optimize performance, the method offers the option of selecting a heel angle profile from a plurality of stored heel angle profiles. Each profile is meticulously optimized for different sailing conditions, enabling the operator to quickly and easily configure the system for the prevailing environment.

For fully automated operation, the method can be configured to automatically select the appropriate heel angle profile based on detected sea state and wind conditions. This intelligent automation streamlines the process of selecting the optimal stabilization settings, enhancing performance and reducing the workload on the operator.

To enhance the system's responsiveness, a predictive algorithm can be employed to anticipate changes in heel angle based on sensor data. This predictive capability enables the system to proactively adjust the gyroscopic stabilization device, minimizing deviations from the target heel angle and improving overall stability.

Finally, to accommodate the individual preferences of different crew members, the method allows for adjusting the sensitivity of the gyroscopic stabilization device 2 based on crew preferences. This personalized approach ensures that the system provides a comfortable and enjoyable sailing experience for everyone on board.

The present disclosure also relates to use of a gyroscope stabilization device 2 operatively connected with a heel angle sensor 3 and a control unit 4 for a wind-propelled marine vessel 1 such as a sailboat 1. A technical benefit may include providing a stable and comfortable sailing experience.

Certain aspects and variants of the disclosure are set forth in the following examples numbered consecutive below.

Example 1: A wind-propelled marine vessel (1) comprising a gyroscopic stabilization device (2), a heel angle sensor (3) configured to detect a heel angle (α) of the wind-propelled marine vessel (1), and a control unit (4), where the control unit (4) is configured to monitor a current heel angle of the wind-propelled marine vessel (1), and an operation of the gyroscopic stabilization device (2), where the control unit (4) is configured to set a target heel angle of the gyroscopic stabilization device (2.

Example 2: The wind-propelled marine vessel (1) of Example 1, where the control unit (4) is configured to determine a nominal heel angle of the wind-propelled marine vessel and to set the target heel angle as the nominal heel angle.

Example 3: The wind-propelled marine vessel (1) of Example 2, where the nominal heel angle is the heel angle where the gyroscopic stabilization device (2) applies an amount of corrective force in both roll directions of the wind-propelled marine vessel (1).

Example 4: The wind-propelled marine vessel (1) of any of the Examples 2-3, where the nominal heel angle is the target heel angle setting of the gyroscopic stabilization device (2) associated with reduced energy expenditure.

Example 5: The wind-propelled marine vessel (1) of any of the Examples 2-4, where the nominal heel angle is at least partly manually configurable.

Example 6: The wind-propelled marine vessel (1) of Example 5, where an input device is arranged so that the nominal heel angle may be set via the input device.

Example 7: The wind-propelled marine vessel (1) of any of the Examples 1-6, where the control unit (4) is configured to control a responsiveness of the gyroscopic stabilization device (2) based on input from an operator so a preferred comfort level can be obtained and/or a power consumption of the stabilization device (2) can be improved and/or optimized.

Example 8: The wind-propelled marine vessel (1) of Example 7, where the control unit (4) is configured to lower the responsiveness of the gyroscopic stabilization device (2) so that the power consumption of the stabilization device (2) is reduced and/or minimized.

Example 9: The wind-propelled marine vessel (1) of Example 1, wherein the control unit (4) is further configured to adjust the target heel angle based on detected wave patterns.

Example 10: The wind-propelled marine vessel (1) of any of the Examples 1-9, wherein the gyroscopic stabilization device (2) comprises a controllable gimbal arrangement to modulate resistance force.

Example 11: The wind-propelled marine vessel (1) of any of the Examples 1-10, wherein the control unit (4) is configured to dampen rapid changes in the target heel angle to alleviate and/or minimize abrupt movements, thereby increasing sailing comfort.

Example 12: The wind-propelled marine vessel (1) of any of the Examples 1-11, wherein the control unit (4) is configured to gradually adjust the target heel angle over time, providing a smooth transition and enhanced sailing experience.

Example 13: The wind-propelled marine vessel (1) of any of the Examples 1-12, wherein the control unit (4) is further configured to take into account the heading of the marine vessel (1).

Example 14: The wind-propelled marine vessel (1) of any of the Examples 1-13, wherein the control unit (4) is further configured to take into account the speed of the marine vessel.

Example 15: The wind-propelled marine vessel (1) of any of the Examples 1-14, wherein the control unit (4) is further configured to limit a rate of change of the target heel angle to enhance crew comfort.

Example 16: The wind-propelled marine vessel (1) of any of the Examples 1-15, wherein the control unit (4) is configured to allow a manual override to adjust the target heel angle, providing direct control to the operator.

Example 17: The wind-propelled marine vessel (1) of any of the Examples 1-16, wherein the control unit (4) is configured to store a plurality of heel angle profiles, each profile optimized for different sailing conditions.

Example 18: The wind-propelled marine vessel (1) of Example 17, wherein the control unit (4) is configured to automatically select a heel angle profile based on detected sea state and wind conditions.

Example 19: The wind-propelled marine vessel (1) of Example 7, wherein the control unit (4) is configured to adjust the sensitivity of the gyroscopic stabilization device (2) based on crew preferences.

Example 20: The wind-propelled marine vessel (1) of Example 1, wherein the heel angle sensor (3) comprises a gyroscope to measure the rate of roll, enhancing the responsiveness of the control unit (4).

Example 21: The wind-propelled marine vessel (1) of Example 1, wherein the control unit (4) is configured to communicate with an autopilot system to coordinate steering and heel angle control.

Example 22: The wind-propelled marine vessel (1) of Example 1, wherein the control unit (4) is configured to provide feedback to the operator via a display interface, showing real-time heel angle data.

Example 23: The wind-propelled marine vessel (1) of Example 1, further comprising a wind sensor, wherein the control unit (4) uses wind speed and direction to adjust the target heel angle.

Example 24: The wind-propelled marine vessel (1) of Example 23, wherein the control unit (4) is configured to reduce the stabilization effect in low wind conditions to improve sailing efficiency.

Example 25: The wind-propelled marine vessel (1) of Example 23, wherein the control unit (4) is configured to increase the stabilization effect in high wind conditions to maintain a stable heel angle.

Example 26: The wind-propelled marine vessel (1) of Example 1, wherein the control unit (4) is configured to learn operator preferences over time and adapt the control strategy of the accordingly.

Example 27: The wind-propelled marine vessel (1) of Example 1, wherein the control unit (4) is configured to provide an alert if the heel angle exceeds a predefined safety threshold.

Example 28: The wind-propelled marine vessel (1) of Example 1, wherein the control unit (4) is configured to adjust the target heel angle based on the marine vessel's polar diagram to optimize speed and stability.

Example 29: The wind-propelled marine vessel (1) of Example 1, wherein the control unit (4) is configured to minimize energy consumption of the gyroscopic stabilization device (2) while maintaining desired heel control.

Example 30: The wind-propelled marine vessel (1) of Example 1, wherein the control unit (4) is configured to take into account the sea state when controlling the heel angle.

Example 31: The wind-propelled marine vessel (1) of Example 1, wherein the control unit (4) is configured to adjust the target heel angle to minimize wave-induced rolling.

Example 32: The wind-propelled marine vessel (1) of Example 1, wherein the control unit (4) is configured to detect and compensate for changes in the marine vessel's center of gravity due to crew movement or load shifting.

Example 33: The wind-propelled marine vessel (1) of Example 1, wherein the control unit (4) is configured to provide a virtual horizon display on a user interface to aid in maintaining a consistent heel angle.

Example 34: The wind-propelled marine vessel (1) of Example 1, wherein the control unit (4) is integrated with a weather forecasting service to anticipate changes in sailing conditions and proactively adjust the target heel angle.

Example 35: The wind-propelled marine vessel (1) of Example 1, wherein the control unit (4) is configured to use data from other sailboats equipped with similar systems to improve its control algorithms.

Example 36: The wind-propelled marine vessel (1) of Example 1, wherein the control unit (4) is configured to automatically switch to a backup control mode in case of sensor failure to ensure continued stability.

Example 37: The wind-propelled marine vessel (1) of Example 1, wherein the control unit (4) is configured to provide a detailed log of heel angle data and control actions for analysis and performance optimization.

Example 38: The wind-propelled marine vessel (1) of any of the Examples 1-37, where the control unit (4) is configured to control a propeller drive unit (10) of the marine vessel to complement the operation by the gyroscopic stabilization device (2).

Example 39: The wind-propelled marine vessel (1) of any of the Examples 1-38, further comprising a device (5) for harnessing wind power to propel the marine vessel.

Example 40: The wind-propelled marine vessel (1) of Example 39, where the device (5) is a sail (5), a kite, a wing, a magnus rotor, or the like, and any combination thereof.

Example 41: The wind-propelled marine vessel (1) of any of the Examples 1-40, further comprising a keel (6), a mast (7) and a rudder (8).

Example 42: The wind-propelled marine vessel (1) of Example 41, further comprising one or more sails (5), the one or more sails (5) are controllable by one or more sheets (9).

Example 43: The wind-propelled marine vessel (1) of Example 42, where the control unit (4) is operatively connected with the rudder (8) and/or sheet(s) (9).

Example 44: The wind-propelled marine vessel (1) of any of the Examples 41-43, where the keel (6) is drop keel and/or a swingable keel.

Example 45: The wind-propelled marine vessel (1) of Example 44, further comprising a mechanism to lower or raise the drop keel, and/or swing the swingable keel.

Example 46: The wind-propelled marine vessel (1) of Example 45, where the control unit (4) is operatively connected with the mechanism.

Example 47: The wind-propelled marine vessel (1) of any of the Examples 1-46, where the wind-propelled marine vessel is a sailboat (1).

Example 48: The wind-propelled marine vessel (1) of any of the Examples 1-47, further comprising an imaging device (11) and/or a LiDAR sensor (11, 12).

Example 49: The wind-propelled marine vessel (1) of Example 48, where the imaging device (11) and/or the LiDAR sensor (11, 12) is/are configured to detect wave patterns and/or height of the waves approaching the marine vessel.

Example 50: The wind-propelled marine vessel (1) of Example 49, where a plurality of imaging devices (11) and/or LiDAR sensors (11, 12) are arranged around the marine vessel so that all directions around the marine vessel are monitored.

Example 51: The wind-propelled marine vessel (1) of any of the Examples 48-50, where the imaging device (11) and/or LiDAR sensor (11, 12) is/are operatively connected with the control unit (4).

Example 52: The wind-propelled marine vessel (1) of Example 51, where the control unit (4) is configured to control the gyroscopic stabilization device (2) based on detections from the imaging device (11) and/or LiDAR sensor (11, 12).

Example 53: The wind-propelled marine vessel (1) of Example 52, where the control unit (4) is configured to enabling predictive adjustments to the gyroscopic stabilization device (2) in view of the detections received from the imaging device (11) and/or LiDAR sensor (11, 12).

Example 54: The wind-propelled marine vessel (1) of any of the Examples 48-53, where the LiDAR sensor (12) is configured to detect an incoming wind.

Example 55: The wind-propelled marine vessel (1) of Example 54, where the LiDAR sensor (12) is configured to detect a strength of the incoming wind and/or the direction of the incoming wind.

Example 56: The wind-propelled marine vessel (1) of Example 54 and/or 55, where the control unit (4) is configured to control the gyroscopic stabilization device (2) based on detections from the LiDAR sensor (12) in relation to the incoming wind.

Example 57: The wind-propelled marine vessel (1) of Example 56, where the control unit (4) is configured to enabling predictive adjustments to the gyroscopic stabilization device (2) in view of the detections received from the LiDAR sensor (12) of the incoming wind.

Example 58: A method for controlling the heel angle of a wind-propelled marine vessel (1), the wind-propelled marine vessel (1) comprising a gyroscopic stabilization device (2), a heel angle sensor (3), and a control unit (4), the method comprising:
- detecting, by the heel angle sensor (3), a current heel angle of the wind-propelled marine vessel (1);
- monitoring, by the control unit (4), the current heel angle and an operation of the gyroscopic stabilization device (2);
- setting, by the control unit (4), a target heel angle for the gyroscopic stabilization device (2); and
- adjusting the gyroscopic stabilization device (2) to maintain the target heel angle, thereby stabilizing the wind-propelled marine vessel (1).

Example 59: The method of Example 58, further comprising determining, by the control unit (4), a nominal heel angle of the wind-propelled marine vessel (1) and setting the target heel angle based on the nominal heel angle.

Example 60: The method of Example 59, wherein the nominal heel angle is the heel angle where the gyroscopic stabilization device (2) applies an amount of corrective force in both roll directions of the wind-propelled marine vessel (1).

Example 61: The method of Example 59 and/or 60, wherein the nominal heel angle is the target heel angle setting of the gyroscopic stabilization device (2) associated with minimum energy expenditure.

Example 62: The method of any of the Examples 59-61, wherein the nominal heel angle is at least partly manually configurable by an operator.

Example 63: The method of any of the Examples 58-62, further comprising controlling a propeller drive unit (10) of the marine vessel to complement the operation of the gyroscopic stabilization device (2).

Example 64: The method of any of the Examples 58-63, further comprising adjusting the target heel angle based on detected wave patterns to minimize wave-induced rolling.

Example 65: The method of any of the Examples 58-64, wherein adjusting the gyroscopic stabilization device (2) comprises modulating a resistance force using a controllable gimbal arrangement.

Example 66: The method of any of the Examples 58-65, further comprising dampening rapid changes in the target heel angle to alleviate and/or minimize abrupt movements and enhance sailing comfort.

Example 67: The method of any of the Examples 58-66, further comprising gradually adjusting the target heel angle over time to provide a smooth transition and enhanced sailing experience.

Example 68: The method of any of the Examples 58-67, further comprising taking into account the heading and/or speed of the marine vessel (1) when determining the nominal heel angle.

Example 69: The method of any of the Examples 58-68, further comprising limiting the rate of change of the target heel angle to enhance crew comfort.

Example 70: The method of any of the Examples 58-69, further comprising allowing a manual override to adjust the target heel angle, providing direct control to the operator.

Example 71: The method of any of the Examples 58-70, further comprising selecting a heel angle profile from a plurality of stored heel angle profiles, each profile optimized for different sailing conditions.

Example 72: The method of Example 71, further comprising automatically selecting the heel angle profile based on detected sea state and wind conditions.

Example 73: The method of any of the Examples 58-72, further comprising using a predictive algorithm to anticipate changes in heel angle based on sensor data.

Example 74: The method of any of the Examples 58-73, further comprising adjusting the sensitivity of the gyroscopic stabilization device (2) based on crew preferences.

Example 75: The method of any of the Examples 58-74, further comprising providing an imaging device (11) and/or a LiDAR sensor (11, 12) on the wind-propelled marine vessel (1).

Example 76: The method of Example 75, further comprising detecting wave patterns and/or wave heights approaching the wind-propelled marine vessel (1) using the imaging device (11) and/or the LiDAR sensor (11, 12).

Example 77: The method of any of the Examples 75-76, wherein a plurality of imaging devices (11) and/or LiDAR sensors (11, 12) are arranged around the wind-propelled marine vessel (1) to monitor all directions.

Example 78: The method of any of the Examples 75-77, further comprising operatively connecting the imaging device (11) and/or LiDAR sensor (11, 12) to the control unit (4).

Example 79: The method of Example 78, further comprising controlling, by the control unit (4), the gyroscopic stabilization device (2) based on detections from the imaging device (11) and/or LiDAR sensor (11, 12).

Example 80: The method of Example 79, further comprising enabling predictive adjustments to the gyroscopic stabilization device (2) in view of the detections received from the imaging device (11) and/or LiDAR sensor (11, 12), thereby proactively counteracting wave-induced heeling motions.

Example 81: The method of any of the Examples 75-80, further comprising detecting an incoming wind using the LiDAR sensor (12).

Example 82: The method of Example 81, further comprising detecting a strength of the incoming wind and/or a direction of the incoming wind using the LiDAR sensor (12).

Example 83: The method of any of the Examples 81-82, further comprising controlling, by the control unit (4), the gyroscopic stabilization device (2) based on detections from the LiDAR sensor (12) in relation to the incoming wind.

Example 84: The method of Example 83, further comprising enabling predictive adjustments to the gyroscopic stabilization device (2) in view of the detections received from the LiDAR sensor (12) of the incoming wind, thereby proactively counteracting wind-induced heeling motions.

Example 84: Use of a gyroscope stabilization device (2) operatively connected with a heel angle sensor (3) and a control unit (4) for a wind-propelled marine vessel (1) such as a sailboat (1).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

**1.** A wind-propelled marine vessel (1) comprising
a gyroscopic stabilization device (2),
a heel angle sensor (3) configured to detect a heel angle (α) of the wind-propelled marine vessel (1), and
a control unit (4),
where the control unit (4) is configured to monitor a current heel angle of the wind-propelled marine vessel (1), and an operation of the gyroscopic stabilization device (2),
where the control unit (4) is configured to set a target heel angle of the gyroscopic stabilization device (2).

**2.** The wind-propelled marine vessel (1) of claim 1, where the control unit (4) is configured to determine a nominal heel angle of the wind-propelled marine vessel and to set the target heel angle as the nominal heel angle.

**3.** The wind-propelled marine vessel (1) of claim 2, where the nominal heel angle is the heel angle where the gyroscopic stabilization device (2) applies an amount of corrective force in both roll directions of the wind-propelled marine vessel (1).

**4.** The wind-propelled marine vessel (1) of any of the claims 2-3, where the nominal heel angle is the target heel angle setting of the gyroscopic stabilization device (2) associated with reduced energy expenditure.

**5.** The wind-propelled marine vessel (1) of any of the claims 2-4, where the nominal heel angle is at least partly manually configurable.

**6.** The wind-propelled marine vessel (1) of any of the claims 1-5, where the control unit (4) is configured to control a responsiveness of the gyroscopic stabilization device (2) based on input from an operator so a preferred comfort level can be obtained and/or a power consumption of the stabilization device (2) can be improved.

**7.** The wind-propelled marine vessel (1) of claim 6, where the control unit (4) is configured to lower the responsiveness of the gyroscopic stabilization device (2) so that the power consumption of the stabilization device (2) may be lowered.

**8.** The wind-propelled marine vessel (1) of any of the claims 1-7, wherein the control unit (4) is configured to dampen rapid changes in the target heel angle to alleviate abrupt movements, thereby increasing sailing comfort.

**9.** The wind-propelled marine vessel (1) of claim 1, wherein the heel angle sensor (3) comprises a gyroscope to measure the rate of roll, enhancing the responsiveness of the control unit (4).

**10.** The wind-propelled marine vessel (1) of any of the claims 1-9, further comprising an imaging device (11) and/or a LiDAR sensor (11, 12), where the imaging device (11) and/or the LiDAR sensor (11, 12) is/are configured to detect wave patterns and/or height of the waves approaching the marine vessel.

**12.** A method for controlling the heel angle of a wind-propelled marine vessel (1), the wind-propelled marine vessel (1) comprising a gyroscopic stabilization device (2), a heel angle sensor (3), and a control unit (4), the method comprising:
- detecting, by the heel angle sensor (3), a current heel angle of the wind-propelled marine vessel (1);
- monitoring, by the control unit (4), the current heel angle and an operation of the gyroscopic stabilization device (2);
- setting, by the control unit (4), a target heel angle for the gyroscopic stabilization device (2); and
- adjusting the gyroscopic stabilization device (2) to maintain the target heel angle, thereby stabilizing the wind-propelled marine vessel (1).

**13.** The method of claim 12, further comprising determining, by the control unit (4), a nominal heel angle of the wind-propelled marine vessel (1) and setting the target heel angle based on the nominal heel angle.

**14.** The method of claim 13, where the nominal heel angle is the heel angle where the gyroscopic stabilization device (2) applies an amount of corrective force in both roll directions of the wind-propelled marine vessel (1), and/or
where the nominal heel angle is the target heel angle setting of the gyroscopic stabilization device (2) associated with reduced energy expenditure.

**15.** The method of any of the claims 12-14, further comprising
dampening rapid changes in the target heel angle to alleviate abrupt movements and enhance sailing comfort,
limiting the rate of change of the target heel angle to enhance crew comfort, and/or adjusting the sensitivity of the gyroscopic stabilization device (2) based on crew preferences.
